# EUROPÄISCHE PATENTSCHRIFT

(11) **EP 2 193 944 B1**
(45) Veröffentlichungstag und Bekanntmachung des Hinweises auf die Patenterteilung: **10.09.2014**
(21) Anmeldenummer: 09015196.0
(22) Anmeldetag: 03.12.2009
(51) Int. Cl.: B60J 3/02, B60Q 1/16

(54) **Blendschutz für Kraftfahrzeuge**
Antiglare protection for motor vehicles
Protection contre l'éblouissement pour véhicules automobiles

(30) Priorität: 03.12.2008 DE 102008060120
(43) Veröffentlichungstag der Anmeldung: 09.06.2010
(73) Patentinhaber: Papst Licensing GmbH & Co. KG, 78112 St. Georgen (DE)
(72) Erfinder: Papst, Hans Dieter, 78112 St. Georgen (DE)
(74) Vertreter: Patentanwälte Westphal, Mussgnug & Partner

(56) Entgegenhaltungen:
- EP-A2- 0 881 110
- EP-A2- 1 093 965
- WO-A1-00/63038
- WO-A1-02/081243
- WO-A1-2004/050405
- AT-U2- 5 754
- BE-A6- 1 016 865
- DE-A1- 3 151 315
- DE-A1- 10 034 997
- DE-A1- 10 060 734
- DE-A1-102005 062 534
- DE-C- 476 238
- DE-U1- 20 008 702
- DE-U1- 20 216 410
- DE-U1-202007 017 919
- FR-A1- 2 115 047
- US-A- 3 351 375
- US-A- 5 397 088
- US-A- 5 662 370
- US-A1- 2002 003 473
- US-A1- 2008 217 951
- US-B1- 6 318 787
- US-B1- 6 325 443

## Beschreibung

Die Erfindung betrifft eine Blendschutzvorrichtung für Kraftfahrzeuge gemäß Oberbegriff des Anspruchs 1, wie sie aus der DE 10 2005 062 534 A1 bekannt ist.

Derartige Einrichtungen sind bei herkömmlichen Kraftfahrzeugen vorhanden, indem im oberen Bereich der Frontscheibe eine im allgemeinen rechteckige Blendschutzplatte Vorgesehen ist, die für den Fahrer individuell einstellbar ist, indem diese um eine waagrechte und/oder senkrechte Achse schwenkbar ist.

Auch sind Blendschutzvorrichtungen bekannt, bei denen Teilflächen an der Blendschutzplatte schwenkbar oder ausziehbar angebracht sind und auf diese Weise eine Vergrößerung der Schutzwirkung ermöglichen, wie dies die US 5,662,370 oder die BE 2005/0579 zeigen.

Bei kleineren Personen ist jedoch diese Vorrichtung nicht ausreichend, denn sie ist wegen der tiefer liegenden Augenhöhe, die oft bei Standardfahrzeugen unterhalb der unteren Kante dieser Platte liegt, nicht befriedigend. Dies trifft auch bei größeren Personen zu, die das Fahrzeug lenken, wenn etwa gegen die tief stehende Sonne gefahren werden muss.

Ebenso tun sich Fahrer schwer, wenn nachts insbesondere bei Regen durch entgegenkommende Fahrzeuge, insbesondere wenn deren Fahrer ihre Scheinwerfer nicht abblenden, eine verminderte Fahrsicherheit besteht.

Der Erfindung liegt die Aufgabe zugrunde, hier auf einfache Weise Abhilfe zu schaffen.

Die Aufgabe wird bei einer gattungsgemäßen Blendschutzvorrichtung mit den kennzeichnenden Merkmalen des Anspruchs 1 gelöst.

Die Erfindung besteht darin, dass die Zusatzvorrichtung den unteren Rand nicht nur in seiner Höhe, sondern auch in einem für den Fahrer individuellen Sichtbereich, z. B. durch Einschwenken, vorzugsweise von rechts her, gestaltbar macht (Dies gift für Länder, in denen Rechtsverkehr besteht).

So ergibt sich unterhalb der Blendschutzplatte im rechten Bereich eine freiere Sichtzone, so dass der untere Rand der Zusatzvorrichtung dort höher liegt und das Licht entgegenkommender Fahrzeuge durch die links davon und tiefer liegende Unterkante derselben besser abgeblendet ist. Die eigene (rechte) Fahrbahnseite ist dann (nachts) besser zu sehen und dadurch wird dem Fahrer auch für den Gesamtüberblick auf die Straße mehr Sicherheit gegeben.

Die Vorrichtung kann auch Schlitze oder andere Ausnehmungen aufweisen und so ein individuelles Sichtfeld ermöglichen. Durch schwenkbare oder verschiebbare Teilflächen der Zusatzvorrichtung oder der Blendschutzplatte selbst kann das Gesichtsfeld eingestellt werden.

Ferner kann sie in Teilflächen wenigstens mit vorzugsweise auswechselbaren Farbfiltem versehen sein, welche z. B. bei sehr hellem Tageslicht eine Art Sonnenbrillenwirkung haben können.

Die obige Bemerkung ("von rechts her") gilt übrigens für die Länder, in denen Rechtsverkehr herrscht. Für Länder, in denen Linksverkehr herrscht, wie z. B. in England, gilt das Entsprechende für die linke Seite.

In einfachster Weise wird der Zusatzmechanismus eine Schienenführung, vorzugsweise im Bereich der linken und rechten Stirnseite des Schirms, aufweisen, welche den Schirm parallel zu verschieben gestattet.

Die Vorrichtung, die den unteren Rand verlängerbar oder gestaltbar macht, kann
als separates Bauteil ausgestaltet und auf die Blendschutzplatte z. B. aufgesteckt oder eingesteckt werden
oder auch in diese selbst schon im Kraftfahrzeug integriert sein.

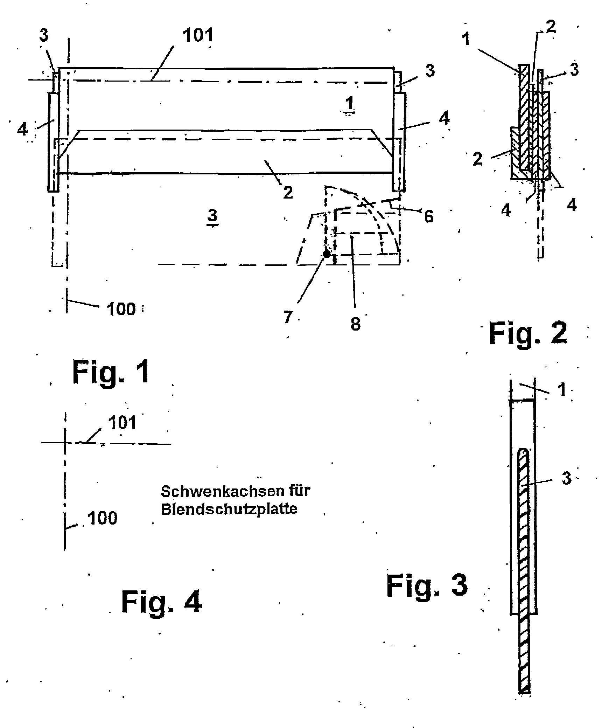

Die Figuren 1 und 2 zeigen ein Ausführungsbeispiel der Erfindung mit verschiedenen zusätzlichen Varianten.

In der Blendschutzplatte 1 ist ein Zusatzmechanismus 2, 3, 4 vorgesehen, mit Halterungsteil 2 dargestellt, welcher die Blendschutzplatte 1 umklammert. Eine Schienenführung 4 ist an den Stirnseiten der Blendschutzplatte 1 bzw. des Schirmes 3 angedeutet zur längsverschieblichen schienenartigen Führung des Schirms 3 an den beiden Stirnseiten. Die Elemente 2 und 4 können natürlich als einstückiges Kunststoffteil ausgebildet sein. Im Element 4 geht es ja nur um die Längsverschieblichkeit des Schirmes 3.

In der Fig. 1 unten ist eine Position gestrichelt angedeutet, welche den Schirm 3 in herausgezogener Position zeigt. Dieser ist (im allgemeinen) rechteckförmig gestaltet, jedoch ist eine Ausnehmung gemäß der gestrichelten Linie 6 angedeutet, und links der Linie 6, im festen Bereich der Scheibe 3, befindet sich ein Drehpunkt 7 für ein schwenkbares Abdeckteil 8. Statt des Abdeckteils 8 kann auch ein Durchsichtteil (als eine Art Sonnenbrille) mit verschiedener Farbfiltermöglichkeit durch Schwenken vorgesehen werden.

Während die Figuren 1 und 2 die auf die Blendschutzplatte 1 aufgesteckte Zusatzvorrichtung 2, 3, 4 zeigen, ist in Fig. 3 angedeutet (in vergrößerter Darstellung), wie die Sichtscheibe 3 in die Blendschutzplatte 1 nach unten herausziehbar stufenlos verstellbar angeordnet werden kann. In eine Fuge der Blendschutzplatte 1 kann der Schirm 3 eingeschoben werden. Die Innenseiten der Fuge können wenigstens teilweise mit Teflon beschichtet sein.

In Fig. 4 sind die herkömmlichen Schwenkachsen für die Blendschutzplatte 1 dargestellt und sind mit 100 und 101 bezeichnet.

In Weiterbildung der Erfindung wird vorgeschlagen, dass eine zweite Blendschutzplatte alternativ oder zusätzlich vorgesehen ist, deren Halterung (unabhängig von der in den Kraftfahrzeugen üblicherweise vorhandenen Blendschutzvorrichtung gemäß dem Oberbegriff des Anspruchs 1) im Bereich des Lenkrads ist. Deren Schirm kann wie in der vorangehenden Beschreibung, insbesondere für die Figuren 1 - 3, ausgebildet sein.

Anstelle der Ausnehmungen im Schirm kann dieser auch Dunkelflächen für die begrenzte gezielte Abblendung entgegenkommender Fahrzeugstrahler aufweisen.

Eine intensive Beleuchtung des für den Fahrer nächsten Fahrbahnrandes würde nicht nur seine eigene Fahrsicherheit (zusätzlich) erhöhen, sondern bei allgemeiner Abstimmung der linken und rechten Kfz-Beleuchtung, d. h. der Scheinwerferintensität zueinander, auch diejenige des Gegenverkehrs (siehe A 13).

## Patentansprüche

1. Blendschutzvorrichtung für Kraftfahrzeuge, wobei im oberen Bereich der Frontscheibe eine Blendschutzplatte (1) vorgesehen ist, wobei der untere Rand der Blendschutzplatte (1) nach unten veränderbar ist, in dem er über die Blendschutzplatte (1) hinaus verstellbar ist, wobei für die Verstellung ein Zusatzmechanismus vorgesehen ist, der einen flachen, ebenen Schirm (3) aufweist, welcher Schirm (3) mit seiner Fläche über den unteren Rand der Blendschutzplatte (1) hinaus, vorzugsweise flächenparallel zu dieser verschiebbar einstellbar ist, und wobei am unteren Rand des Schirms (3) auf einer Seite eine Ausnehmung für ein individuelles Sichtfeld vorgesehen ist,
**dadurch gekennzeichnet, dass**
durch schwenkbare oder verschiebbare Teilflächen (8) des Zusatzmechanismus oder der Blendschutzplatte (1) das Sichtfeld einstellbar ist.

2. Blendschutzvorrichtung für Kraftfahrzeuge nach Anspruch 1,
**dadurch gekennzeichnet, dass**
der Zusatzmechanismus in die Blendschutzplatte (1) integriert ist.

3. Blendschutzvorrichtung für Kraftfahrzeuge nach Anspruch 1,
**dadurch gekennzeichnet, dass**
der Zusatzmechanismus als separate Einheit ausgebildet in einfacher Weise mit der Blendschutzplatte (1) verbindbar ist.

4. Blendschutzvorrichtung für Kraftfahrzeuge nach Anspruch 3,
**dadurch gekennzeichnet, dass** die separate Einheit durch entsprechende Formgebung formschlüssig und / oder elastisch ausgebildet auf die Blendschutzplatte (1) quasi aufgeschnappt oder in diese eingesetzt werden kann.

5. Blendschutzvorrichtung für Kraftfahrzeuge nach Anspruch 1,
**dadurch gekennzeichnet, dass**
die Blendschutzplatte (1) selbst nach unten, vorzugsweise zusätzlich, verschiebbar ist, vor allem parallel zu ihren Fläche.

6. Blendschutzvorrichtung für Kraftfahrzeuge nach einem der Ansprüche 1 bis 5,
**dadurch gekennzeichnet, dass**
eine Halterung für eine zweite Blendschutzplatte vorgesehen ist, welche insbesondere einen flachen Schirm aufweist, welcher räumlich einstellbar ist, wobei die Halterung in Reichweite der Hand, die das Lenkrad führt, angeordnet ist.

7. Blendschutzvorrichtung für Kraftfahrzeuge nach Anspruch 6,
**dadurch gekennzeichnet, dass**
die Halterung im Bereich des Lenkrads, insbesondere am Armaturenbrett vorgesehen ist.

8. Blendschutzvorrichtung für Kraftfahrzeuge nach Anspruch 7,
**dadurch gekennzeichnet, dass**
die Halterung, insbesondere als separate Einheit ausgebildet, in einfacher Weise mit dem Armaturenbrett oder Lenkrad selbst verbindbar ist.

9. Blendschutzvorrichtung für Kraftfahrzeuge nach einem der Ansprüche 6 bis 8
**dadurch gekennzeichnet, dass**
der Schirm (3) durch einen Schieber oder Schwenkmechanismus in seiner Kontur individuell einstellbar ist.

10. Blendschutzvorrichtung für Kraftfahrzeuge, nach einem der Ansprüche 1 bis 9,
**dadurch gekennzeichnet, dass**
ein Scheinwerfer vorgesehen ist, der den beim Fahrzeug nächsten Fahrbahnrandbereich zusätzlich beleuchtet, d.h. bei Rechtsverkehr der rechte, bei Linksverkehr der linke - unabhängig, ob der Fahrersitz links oder rechts im Fahrzeug ist.

11. Blendschutzvorrichtung für Kraftfahrzeuge nach Anspruch 10,
**dadurch gekennzeichnet, dass**
die vorhandene Scheinwerferanlage des Kraftfahrzeugs für die zusätzliche Beleuchtung ausgebildet ist.

12. Blendschutzvorrichtung für Kraftfahrzeuge nach Anspruch 11,
**dadurch gekennzeichnet, dass**
die zusätzliche Beleuchtung dadurch geschieht, dass, bei Nahverkehr, die linke Scheinwerferintensität deutlich geringer ist als die des rechten Scheinwerfers.

13. Blendschutzvorrichtung für Kraftfahrzeuge nach einer der Ansprüche 10 bis 12,
**dadurch gekennzeichnet, dass**
die zusätzliche Beleuchtung mit dem Abblendschalter gemeinsam betätigbar, also mit diesem gekoppelt werden kann, wobei vorzugsweise diese Kopplung wahlweise aufhebbar ausgebildet ist.

14. Blendschutzvorrichtung für Kraftfahrzeuge nach einem der Ansprüche 1 bis 13,
**dadurch gekennzeichnet, dass**
sie fahrerseitig angebracht ist.

15. Blendschutzvorrichtung für Kraftfahrzeuge nach einem der Ansprüche 1 bis 14,
**dadurch gekennzeichnet, dass**
die Teilfläche (8) als Durchsichtsteil ausgebildet ist.

16. Blendschutzvorrichtung für Kraftfahrzeuge nach Anspruch 15,
**dadurch gekennzeichnet, dass**
das Durchsichtsteil (8) mit schwenkbaren Farbfiltern versehen ist.

17. Blendschutzvorrichtung für Kraftfahrzeuge nach Anspruch 15 oder 16,
**dadurch gekennzeichnet, dass**
die Blendschutzplatte (1) oder der Zusatzmechanismus in Teilflächen mit vorzugsweise auswechselbaren Farbfiltern versehen ist.

## Claims

1. Anti-dazzle device for vehicles in which an anti-dazzle plate (1) is provided in the upper area of the windscreen, such that the lower edge of the plate (1) can be altered downwards, and is adjustable beyond the plate itself (1); for this adjustment, an additional mechanism is provided which has a flat, smooth visor (3), this visor (3) being adjustable by sliding, with its surface being over the lower edge of the anti-dazzle plate (1) and preferably parallel to it; a recess for an individual field of view is provided on one side of the lower edge of the visor (3), distinguished by the fact that this field is adjustable by swivel-type or sliding components (8) of the additional mechanism or the anti-dazzle plate (1).

2. Anti-dazzle device for vehicles in accordance with claim 1, distinguished by the fact that the additional mechanism is integrated into the anti-dazzle plate (1).

3. Anti-dazzle device for vehicles in accordance with claim 1, distinguished by the fact that the additional mechanism, designed as a separate unit, is connectable to the anti-dazzle plate (1) in a simple way.

4. Anti-dazzle device for vehicles in accordance with claim 3, distinguished by the fact that the separate unit, when appropriately contoured by an interlocking and/or elastic design, can be effectively snapped open on the anti-dazzle plate (1) or inserted into it.

5. Anti-dazzle device for vehicles in accordance with claim 1, distinguished by the fact that the anti-dazzle plate (1) can itself, preferably in addition, be slid downwards, primarily parallel to its surface.

6. Anti-dazzle device for vehicles in accordance with one of the claims 1 to 5, distinguished by the fact that a bracket is provided for a second anti-dazzle plate, which has in particular a spatially adjustable flat visor, so that the bracket is positioned within reach of the hand holding the steering wheel.

7. Anti-dazzle device for vehicles in accordance with claim 6, distinguished by the fact that the bracket is provided in the steering wheel area, in particular on the dashboard.

8. Anti-dazzle device for vehicles in accordance with claim7, distinguished by the fact that the bracket, especially designed as a separate unit, is connectable to the dashboard or steering wheel itself in a simple way.

9. Anti-dazzle device for vehicles in accordance with one of the claims 6 to 8, distinguished by the fact that the shape of the visor (3) is individually adjustable by a slider or swivel-type mechanism.

10. Anti-dazzle device for vehicles in accordance with one of claims 1 to 9, distinguished by the fact that a headlight is provided which, in addition, illuminates the roadside area nearest to the vehicle, i.e. the right hand side in right hand traffic, the left hand side in left hand traffic, regardless of whether the driver's seat is on the left or the right within the vehicle.

11. Anti-dazzle device for vehicles in accordance with claim 10, distinguished by the fact that the vehicle's existing headlight system is designed for the additional lighting.

12. Anti-dazzle device for vehicles in accordance with claim 11, distinguished by the fact that, in right hand traffic, the additional lighting is effected through the intensity of the left hand headlight being significantly less than that of the left hand headlight.

13. Anti-dazzle device for vehicles in accordance with one of the claims 10 to 12, distinguished by the fact that the additional lighting is operable in conjunction with the dip switch, i.e. it can be coupled to it, and is preferably designed so that this linkage can be selectively cancelled.

14. Anti-dazzle device for vehicles in accordance with one of the claims 1 to 13, distinguished by the fact that it is mounted on the driver's side.

15. Anti-dazzle device for vehicles in accordance with one of the claims 1 to 14, distinguished by the fact that the component (8) is of transparent design.

16. Anti-dazzle device for vehicles in accordance with claim 15, distinguished by the fact that the transparent component (8) is provided with swivel-type colour filters.

17. Anti-dazzle device for vehicles in accordance with claim 15 or 16, distinguished by the fact that the anti-dazzle plate (1), or the additional mechanism, is provided with components preferably having replaceable colour filters.

## Revendications

1. °) Dispositif de protection anti-éblouissement pour des véhicules automobiles dans lequel, dans la zone supérieure du pare-brise il est prévu une plaque de protection anti-éblouissement (1), le bord inférieur de cette plaque de protection anti-éblouissement (1) pouvant être déplacé vers le bas par réglage sur la plaque de protection anti-éblouissement (1), pour permettre ce réglage, étant prévu un mécanisme supplémentaire comportant un écran plat plan (3), cet écran (3) pouvant être réglé par coulissement par sa surface, sur le bord inférieur de la plaque de protection anti-éblouissement (1), de préférence parallèlement à la surface de celle-ci, et sur le bord inférieur de l'écran (3), d'un côté de celui-ci étant prévu, un évidement permettant un champ de vision individuel,
**caractérisé en ce que**
le champs de vision peut être réglé par des surfaces partielles (8) pivotantes ou coulissantes du mécanisme supplémentaire ou de la plaque de protection anti-éblouissement (1).

2. °) Dispositif de protection anti-éblouissement pour des véhicules automobiles conforme à la revendication 1,
**caractérisé en ce que**
le mécanisme supplémentaire est intégré dans la plaque de protection anti-éblouissement (1).

3. °) Dispositif de protection anti-éblouissement pour des véhicules automobiles conforme à la revendication 1,
**caractérisé en ce que**
le mécanisme supplémentaire, réalisé sous la forme d'une unité séparée peut être relié de manière simple à la plaque de protection anti-éblouissement (1).

4. °) Dispositif de protection anti-éblouissement pour des véhicules automobiles conforme à la revendication 3,
**caractérisé en ce que**
l'unité séparée, réalisée élastiquement et/ ou formée de manière adaptée est quasiment encliquetée sur la plaque de protection anti-éblouissement (1) ou peut être insérée dans celle-ci.

5. °) Dispositif de protection anti-éblouissement pour des véhicules automobiles conforme à la revendication 1,
**caractérisé en ce que**
la plaque de protection anti-éblouissement (1) peut en elle-même coulisser vers le bas, de préférence en complément, essentiellement parallèlement. à sa surface.

6. °) Dispositif de protection anti-éblouissement pour des véhicules automobiles conforme à l'une des revendications 1 à 5,
**caractérisé en ce qu'**
il est prévu un élément de fixation pour une seconde plaque de protection anti-éblouissement qui comporte en particulier un écran plat pouvant être réglé dans l'espace, cet élément de fixation étant situé dans la zone de portée de la main qui guide le volant de direction.

7. °) Dispositif de protection anti-éblouissement pour des véhicules automobiles conforme à la revendication 6,
**caractérisé en ce que**
l'élément de fixation est situé dans la zone du volant de direction, en particulier sur le tableau de bord.

8. °) Dispositif de protection anti-éblouissement pour des véhicules automobiles conforme à la revendication 7,
**caractérisé en ce que**
l'élément de fixation, en particulier, réalisé sous la forme d'une unité séparée peut être relié de façon simple au tableau de bord ou au volant de direction lui-même.

9. °) Dispositif de protection anti-éblouissement pour des véhicules automobiles conforme à l'une des revendications 6 à 8,
**caractérisé en ce que**
le contour de l'écran (3) peut être réglé individuellement par un coulisseau ou un mécanisme pivotant.

10. °) Dispositif de protection anti-éblouissement pour des véhicules automobiles conforme à l'une des revendications 1 à 9,
**caractérisé en ce qu'**
il est prévu un phare qui éclaire en complément dans le véhicule automobile la zone de bord de la voie de roulement la plus proche, c'est-à-dire dans le cas d'une conduite à droite, la voie de roulement droite, et dans le cas d'une conduite à gauche la voie de roulement gauche indépendamment du fait que le siège du conducteur soit situé à gauche ou à droite dans le véhicule.

11. °) Dispositif de protection anti-éblouissement pour des véhicules automobiles conforme à la revendication 10,
**caractérisé en ce que**
l'installation de phare existante dans le véhicule automobile est réalisée pour permettre l'éclairage supplémentaire.

12. °) Dispositif de protection anti-éblouissement pour des véhicules automobiles conforme à la revendication 11,
**caractérisé en ce que**
l'éclairage supplémentaire est tel que, dans le cas d'une conduite à droite, l'intensité du phare gauche est notablement plus faible que celle du phare droit.

13. °) Dispositif de protection anti-éblouissement pour des véhicules automobiles conforme à l'une des revendications 10 à 12,
**caractérisé en ce que**
l'éclairage supplémentaire peut être actionné conjointement au commutateur d'éclairage de code et donc peut être accouplé à ce commutateur, cet accouplement étant de préférence sélectivement relevable.

14. °) Dispositif de protection anti-éblouissement pour des véhicules automobiles conforme à l'une des revendications 1 à 13,
**caractérisé en ce qu'**
il est monté côté conducteur.

15. °) Dispositif de protection anti-éblouissement pour des véhicules automobiles conforme à l'une des revendications 1 à 14,
**caractérisé en ce que**
la surface partielle (8) est réalisée sous la forme d'une partie transparente.

16. °) Dispositif de protection anti-éblouissement pour des véhicules automobiles conforme à la revendication 15,
**caractérisé en ce que**
la partie transparente (8) est équipée de filtres colorés pivotants.

17. °) Dispositif de protection anti-éblouissement pour des véhicules automobiles conforme à la revendication 15,
**caractérisé en ce que**
la plaque de protection anti-éblouissement (1) ou le mécanisme supplémentaire est équipé dans des surfaces partielles de filtres colorés de préférence interchangeables.
